# FASCICULE DE BREVET EUROPEEN

(11) **EP 2 344 725 B1**
(45) Date de publication et mention de la délivrance du brevet: **25.07.2012**
(21) Numéro de dépôt: 09783558.1
(22) Date de dépôt: 29.09.2009
(51) Int. Cl.: F01D 17/16, F01D 17/20, F02C 6/08, F02C 9/18, F02C 9/22

(54) **SYSTEME DE COMMANDE D'EQUIPEMENTS A GEOMETRIE VARIABLE D'UN MOTEUR A TURBINE A GAZ COMPORTANT NOTAMMENT UNE LIAISON PAR PISTES DE GUIDAGE**
SYSTEM ZUR STEUERUNG EINER GASTURBINENMOTOREINRICHTUNG MIT VARIABLER GEOMETRIE, INSBESONDERE MIT EINER FÜHRUNGSBAHNVERBINDUNG
SYSTEM FOR CONTROLLING VARIABLE GEOMETRY EQUIPMENT OF A GAS TURBINE ENGINE ESPECIALLY COMPRISING A GUIDING TRACK CONNECTION

(30) Priorité: 30.09.2008 FR 0856569
(43) Date de publication de la demande: 20.07.2011
(73) Titulaire: Snecma, 75015 Paris (FR)
(72) Inventeur: COLOTTE, Baptiste, Benoît, F-77000 Melun (FR); GAULLY, Bruno, Robert, F-91630 Marolles en Hurepoix (FR)
(74) Mandataire: Gevers France
(86) Numéro de dépôt international: PCT/EP2009/062625
(87) Numéro de publication internationale: WO 2010/037751

(56) Documents cités:
- EP-A- 1 398 464
- EP-A- 1 724 471
- WO-A-2007/116319
- DE-B- 1 224 563
- FR-A- 2 445 439
- FR-A- 2 633 046

## Description

La présente invention se rapporte au domaine général de la commande d'équipements à géométrie variable d'un moteur à turbine à gaz, notamment un turboréacteur. L'invention concerne plus particulièrement l'optimisation de la commande de plusieurs équipements faisant partie de corps distincts du moteur à turbine à gaz.

Par "équipement à géométrie variable", on entend ici un équipement relié à un organe de commande et dont la dimension, la forme, la position et/ou la vitesse est ou sont susceptible(s) d'être modifiée(s) en fonction d'événements détectés ou de paramètres définis, pour agir sur le fonctionnement du moteur. Des exemples d'équipements à géométrie variable sont des vannes de décharge d'air du compresseur (à ouverture variable), des aubes fixes de compresseur à angle de calage variable, des aubes de turbine dont le jeu au sommet est variable, des pompes à carburant à débit variable, etc.

Le terme corps désigne classiquement un sous-ensemble du moteur à turbine à gaz, comportant comme organes principaux un compresseur et une turbine assemblés sur un même axe. Il peut être multicorps. Un moteur double corps comporte un corps désigné à haute pression et un corps désigné à basse pression. Chaque corps comporte un compresseur et une turbine, dont les aubes sont entraînées en rotation autour de l'axe de l'arbre sur lequel elles sont montées.

En général, les différents corps d'un moteur à turbine à gaz sont conçus pour fonctionner de manière indépendante les uns des autres. Leurs vitesses de rotation sont indépendantes, même si elles sont liées ou corrélées dans certains régimes de fonctionnement.

Pour commander des équipements à géométrie variable faisant partie de corps différents, on prévoit pour ces équipements distincts des systèmes de commande distincts : deux circuits de commande, deux actionneurs, deux sources de puissance, etc. Il s'ensuit que la masse, le coût et l'encombrement d'un tel système de commande des équipements sont relativement élevés. Une telle configuration est celle retenue dans la demande de brevet européen de la demanderesse, publiée sous le numéro EP 1 724 472.

Par exemple, le compresseur du corps basse pression peut comporter une ou plusieurs vannes de décharge d'air (souvent désignées VBV, qui est l'acronyme de leur dénomination anglaise "Variable Bleed Valve"), tandis que le compresseur du corps haute pression peut comporter un ou plusieurs étages d'aubes de stator à angle de calage variable (souvent désignés VSV, qui est l'acronyme de leur dénomination anglaise "Variable Stator Vanes"). Pour diminuer la masse de ces équipements et de leurs organes de commande, il est envisageable de ne pas installer de VBV. Si l'économie ainsi réalisée est conséquente (on supprime les actionneurs, les servovalves, les canalisations, les harnais, etc., qui leur sont associés), les inconvénients sont importants, notamment en régime de ralenti si de l'eau ou de la grêle pénètre dans le moteur, entraînant un risque accru d'extinction de celui-ci.

La demande de brevet FR 2 445 439 de la société General Electric Company décrit un moyen unique pour commander des vannes de décharge d'air d'un étage basse pression et des étages de stator à angle de calage variable d'un étage haute pression, mais ce moyen commande les deux équipements essentiellement de façon séquentielle, seules les aubes de stator étant actionnées lors du fonctionnement normal de la turbomachine (c'est à dire au dessus du régime de ralenti).

Le document DE 1224563 décrit aussi un système de commande d'au moins deux équipements à géométrie variable de turbomachine de l'art antérieur.

L'invention vise à proposer un moteur à turbine à gaz avec des équipements à géométrie variable appartenant à des corps différents du moteur et un système de commande de ces équipements qui soit optimisé.

C'est ainsi que l'invention concerne un système de commande d'au moins deux équipements à géométrie variable d'un moteur à turbine à gaz, présentant les caractéristiques de la revendication 1.

En utilisant un seul actionneur pour la commande de plusieurs (au moins deux) équipements à géométrie variable, le système de commande permet de réduire le nombre de pièces du moteur et ainsi d'atteindre l'objectif de l'invention. La masse, le volume et le coût d'un second système de commande sont, au moins en grande partie, évités, puisque les équipements des premier et second corps sont actionnés par le même actionneur.

Selon une forme de réalisation, le système de commande est apte à commander plus de deux équipements à géométrie variable à l'aide d'un unique actionneur.

Selon une forme de réalisation, l'actionneur est commandé par la vitesse de rotation du premier corps.

Ainsi, l'équipement du second corps est commandé par la vitesse de rotation du premier corps, par le truchement de l'actionneur.

Selon une forme particulière de réalisation le premier corps est un corps haute pression et le deuxième corps un corps basse pression.

En particulier, le moteur à turbine à gaz comportant un compresseur basse pression et un compresseur haute pression, l'équipement à géométrie variable du compresseur basse pression est commandé par la vitesse de rotation du compresseur haute pression.

Selon une forme de réalisation, dans le cas d'un moteur à turbine à gaz avec un corps haute pression et un corps basse pression, les équipements à géométrie variable du corps haute pression se situent à proximité du corps basse pression (par exemple à proximité du côté amont du corps haute pression).

Selon une forme de réalisation particulière dans ce cas, le moteur à turbine à gaz est à double-corps, avec un corps haute pression et un corps basse pression. De préférence dans ce cas, le ou les étages d'aubes de stator à angle de calage variable fait ou font partie du corps haute pression, le premier équipement commandé par le système de commande faisant partie du corps basse pression.

Selon une forme de réalisation particulière dans ce cas, l'étage d'aubes comporte une pluralité d'aubes, montées chacune de façon pivotante sur un carter du moteur, et un anneau de commande entourant le carter est relié à chacune des aubes de l'étage par l'intermédiaire de leviers, l'actionneur étant apte à entraîner en rotation l'anneau de commande de l'étage par l'intermédiaire d'un organe pilote monté sur le carter.

Selon une forme de réalisation, un équipement à géométrie variable est une vanne de décharge d'air du moteur. Cet équipement peut comprendre une vanne ou une pluralité de vannes de décharge d'air. Il s'agit par exemple d'une vanne de décharge d'air du type VBV en aval du compresseur basse pression.

Dans ce cas particulier, l'invention présente les avantages suivants :
On a besoin d'un seul jeu d'actionneurs au lieu de deux, ainsi que des servitudes associées à savoir les canalisations, les servovalves, les sorties sur le HMU ou moteur électrique, etc.

On conserve un degré de liberté sur les performances du booster sans ajout de géométrie variable complète.

On gagne en capacité de maintenance : en effet la suppression de l'actionnement VBV élimine les risques de pannes sur cette géométrie variable.

On préserve la capacité à évacuer de l'eau ou de la grêle à bas régime. Il s'ensuit une meilleure robustesse à l'extinction de la chambre au ralenti vis à vis d'une architecture booster sans VBV.

Le système électrique est simplifié. Une boucle locale d'asservissement est supprimée : sortie calculateur, harnais, capteur de retour de position (TBC), dimensionnement calculateur réduit...)

Le système de commande de l'invention peut être adapté aussi pour la commande de différents types d'équipements. Outre ceux présentés ci-dessus, les équipements à géométrie variable peuvent notamment comporter ou former un élément de l'un ou plusieurs des dispositifs suivants :
- une vanne de décharge d'air du compresseur haute pression à ouverture proportionnelle (souvent désignée par l'expression anglaise "Transient Bleed Valve" (d'acronyme TBV) ou "Start Bleed valve" (d'acronyme SBV));
- une vanne de décharge d'air du compresseur haute pression tout ou rien (souvent désignée par l'expression anglaise "Handling Bleed Valve" (d'acronyme HBV)) ;
- une vanne de régulation d'un débit d'air contribuant au contrôle de jeu dans une turbine basse pression (souvent désigné par l'expression anglaise "Low Pressure Turbine Active Clearance Control" (d'acronyme LPTACC)), ou dans une turbine haute pression (souvent désigné par l'expression anglaise "High Pressure Turbine Active Clearance Control" (d'acronyme HPTACC)).

Selon une forme de réalisation, dans le système de commande, l'actionneur comporte un organe de commande mobile dont les déplacements transmettent la commande aux équipements à géométrie variable. L'organe de commande peut par exemple comporter le bras d'un vérin.

Selon une forme de réalisation, l'actionneur est agencé pour actionner le premier équipement à géométrie variable en faisant varier un paramètre dans une plage d'actionnement du premier équipement, l'actionneur étant agencé pour actionner le deuxième équipement à géométrie variable en faisant varier le même paramètre dans une plage d'actionnement du second équipement.

Le paramètre de l'actionneur indiqué ci-dessus peut par exemple être la position de l'organe d'actionnement de l'actionneur. Ainsi, ce paramètre peut être la position de l'extrémité du bras d'un vérin. Ainsi, dans ce cas, faire varier ce paramètre signifie déplacer l'extrémité du bras du vérin ou la position de l'extrémité opérante de l'actionneur.

Selon une forme de réalisation préférée le système de commande comprenant un disque rotatif autour d'un axe relié auxdits équipements par des moyens de transmission mécanique comprenant un pion parcourant une piste de guidage, le profil des pistes définissant les lois d'actionnement des deux équipements quand le disque est entraîné en rotation autour de son axe par l'actionneur.

Plus particulièrement les moyens de transmission mécanique comprennent de tiges d'actionnement des dits équipements, les pistes de guidage étant ménagées sur le disque rotatif et les pions étant solidaires des tiges d'actionnement des dits équipements. Les tiges d'actionnement des dits équipements sont conformément à une autre caractéristique mobiles en translation.

Dans le cas d'une commande conjointe des VSV et des VBV, le disque rotatif est monté sur le carter du compresseur du premier corps.

L'actionneur peut être un moteur électrique, un moteur hydraulique ou un moteur pneumatique.

Lorsque le paramètre d'actionnement varie dans un intervalle situé en dehors de la plage d'actionnement d'un équipement, ce dernier n'est pas actionné par l'actionneur. Un tel intervalle de valeurs du paramètre de l'actionneur, dans laquelle aucune action n'est effectivement appliquée à l'équipement considéré, constitue pour ledit équipement une "course morte". Dans une telle plage, quelles que soient les variations du paramètre, l'actionneur n'agit pas (ou pas significativement) sur l'équipement considéré.

Selon une forme de réalisation particulière, au moins une partie de la plage d'actionnement du premier équipement est hors de la plage d'actionnement de second équipement.

La commande par un actionneur unique de deux équipements à géométrie variable peut être facilitée par le fait que les plages d'actionnements des deux équipements ne se correspondent pas totalement, permettant hors de la zone commune de n'actionner qu'un seul équipement.

Selon une autre forme de réalisation particulière, les plages d'actionnement des premier et deuxième équipements sont disjointes, c'est-à-dire que la plage d'actionnement du premier équipement est entièrement hors de la plage d'actionnement du second équipement (les plaques ne se recoupent pas).

Ainsi, les équipements peuvent être actionnés de manière séquentielle. En effet, lorsque l'on fait varier le paramètre de l'actionneur dans la plage d'actionnement du premier équipement, ces variations n'induisent sensiblement aucun mouvement, aucune conséquence sur le second équipement, et vice-versa.

Selon une forme de réalisation particulière, la plage d'actionnement de l'un des premier et deuxième équipements est entièrement contenue dans la plage d'actionnement de l'autre équipement.

Dans ce cas, les équipements sont actionnés simultanément dans leur zone commune, ce qui peut présenter des avantages selon la nature des équipements. Une telle forme de réalisation peut permettre de prévoir une amplitude d'actionnement plus importante.

Selon une forme de réalisation particulière dans ce cas, la plage d'actionnement de l'un des équipements a une amplitude très inférieure à l'amplitude totale de la plage d'actionnement de l'autre équipement; par exemple, elle peut représenter moins de 20% ou moins de 10% de cette plage. De la sorte, lorsque la plage de l'équipement à la plage d'actionnement réduite est incluse dans la plage de l'autre équipement, les actions de commande de l'équipement n'entrainent qu'une variation faible et/ou peu sensible de la commande de l'autre équipement. Cette disposition facilite la commande, avec un seul système de commande, de deux équipements.

Le système de commande est de préférence agencé pour que les variations du paramètre de l'actionneur entre les bornes de sa plage d'actionnement suffisent pour actionner les équipements avec une amplitude suffisante.

Selon une forme de réalisation, la liaison entre l'actionneur et l'un des équipements comporte un dispositif de débrayage, apte à débrayer l'entrainement de cet équipement par l'actionneur sur une plage de valeurs du paramètre d'actionnement. Cette plage de valeurs est donc située en dehors de la plage d'actionnement de l'équipement considéré. Ainsi, le dispositif de débrayage permet de réserver un intervalle de la plage d'actionnement à la seule commande de l'autre (ou des autres) équipement(s). Cela peut être essentiel lorsque l'équipement considéré ne doit pas être affecté alors même que la commande de l'un des autres équipements commandés varie.

Selon un mode de réalisation, le système de commande comporte en outre des moyens de rappel maintenant un organe de commande de l'un des équipements dans une position prédéterminée, au moins lorsque le paramètre de l'actionneur varie dans un intervalle situé à l'extérieur de la plage d'actionnement de l'équipement.

L'invention concerne encore un moteur à turbine à gaz équipé du système de commande présenté ci-dessus.

L'invention sera mieux comprise à l'aide de la description suivante de la forme de réalisation préférée du moteur et du système de l'invention, en référence aux planches de dessins annexées, sur lesquelles :
- la figure 1 représente en coupe axiale une partie d'un turboréacteur de l'art antérieur comportant une vanne de décharge VBV et des ailettes de stator à calage variable ;
- la figure 2 représente une vue en perspective d'un système de commande de VSV selon l'art antérieur ;
- la figure 3 est une vue schématique de dessus d'un dispositif de commande de la position des deux équipements ;
- les figures 4 et 5 sont des courbes donnant la position des aubes de stator et des vannes de décharge en fonction du régime du moteur, dans le cas d'un recouvrement et dans le cas d'une absence de recouvrement des plages d'ouverture et de fermeture des deux équipements.

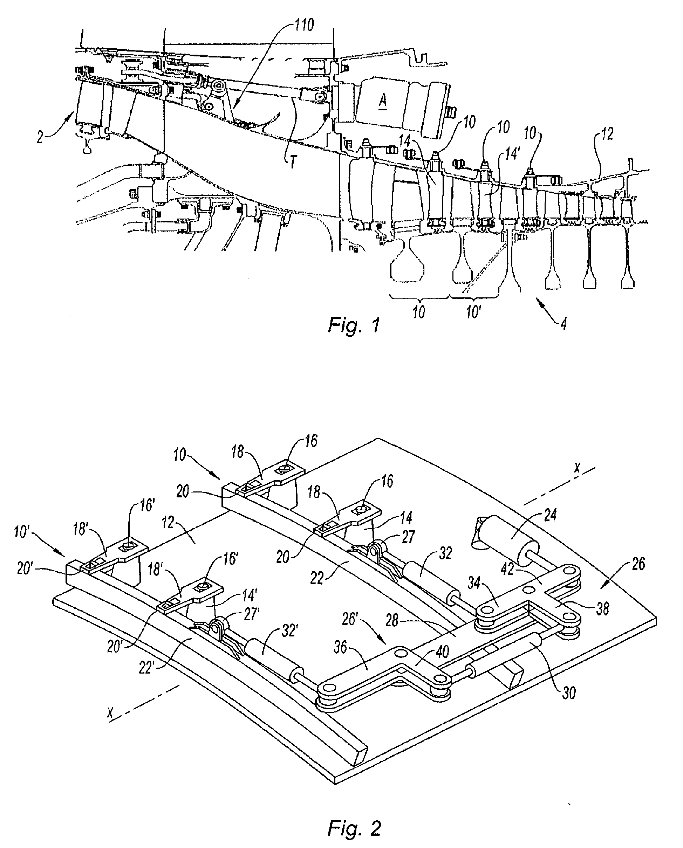

De manière connue comme on l'a représenté sur les figures 1 et 2, un moteur à turbine à gaz à application dans le domaine aéronautique tel qu'un turboréacteur, ici d'axe X-X, comporte, d'amont en aval, une soufflante, un compresseur basse pression 2, un compresseur haute pression 4, une chambre de combustion, une turbine haute pression, une turbine basse pression et une tuyère d'éjection des gaz (non représentés). Le compresseur et la turbine haute pression sont solidaires d'un même arbre, dit haute pression, et appartiennent ainsi au corps haute pression du moteur ou premier corps tournant à une première vitesse, tandis que le compresseur et la turbine basse pression sont solidaires d'un même arbre, dit basse pression, et appartiennent ainsi au corps basse pression du moteur ou deuxième corps tournant à une deuxième vitesse.

Ci-après, on utilisera les abréviations BP pour basse pression et HP pour haute pression.

Le compresseur HP 4 comporte au moins un étage formé d'une roue d'aubes mobiles et d'une roue d'aubes fixes (encore dénommées aubes de stator). Chaque étage est formé d'une pluralité d'aubes disposées radialement autour de l'axe X-X du moteur à turbine à gaz. En l'espèce, le compresseur HP comporte une pluralité d'étages 10, 10' etc. avec une alternance de roues d'aubes mobiles et de roues d'aubes fixes. Les aubes sont enveloppées par un carter 12 cylindrique qui est centrée sur l'axe X-X du moteur.

Parmi les roues d'aubes fixes, au moins un étage 10 comporte des aubes 14 dites à angle de calage variable. Chaque aube 14 est montée pivotante autour d'un axe 16 (ou pivot) qui traverse le carter 12. La position angulaire de chaque aube 14 peut être réglée par entraînement en rotation de son pivot 16.

L'étage 10 d'aubes à calage variable forme un premier équipement à géométrie variable, appartenant au corps HP (puisqu'il appartient au compresseur HP). Le paramètre variable de cet équipement est l'angle des aubes 14; en l'espèce, toutes les aubes 14 sont entraînées simultanément en rotation, grâce à un anneau 22 de commande de l'étage 10 d'aubes 14.

L'anneau de commande 22 est de forme globalement circulaire; il entoure le carter 12 et est centré sur l'axe X-X du moteur. La modification synchronisée de la position angulaire des aubes 14 est ainsi obtenue par une rotation de l'anneau de commande 22 autour de l'axe X-X du moteur, de manière connue.

Sur la figure 2, on a représenté un mécanisme de commande synchronisée de deux étages d'aubes statoriques, 10 et 10' de l'art antérieur.

Le système de commande est agencé pour commander la rotation des anneaux 22 et 22' de commande des étages 10 et 10' d'aubes à angle de calage variable.

Le système de commande comporte un actionneur 24, ici un vérin, qui est relié mécaniquement à l'étage 10 pour entraîner en rotation les aubes de stator.

A cet effet, chaque pivot 16, 16' des aubes à calage variable 14, 14' est relié à une extrémité d'une biellette 18, 18' de commande dont l'autre extrémité est articulée autour d'un tourillon 20, 20' fixé sur l'anneau de commande 22, 22' et s'étendant radialement par rapport à lui.

L'anneau comporte au moins une chape 27, 27' à laquelle est fixée une extrémité d'une bielle 32, 32' de commande, de type ridoir à vis, s'étendant sensiblement tangentiellement à l'anneau 22, 22'. L'autre extrémité de la bielle de commande 32 est solidaire d'un organe de renvoi 26, 26', monté pivotant sur un boîtier 28 du carter 12 du compresseur. L'organe de renvoi pilote 26 est en forme de T. La bielle de commande 32 est fixée à une extrémité d'une première branche 34 de l'organe de renvoi pilote 26, l'extrémité de la tige du vérin 24 étant fixée, de manière articulée, à l'extrémité d'une deuxième branche 42 qui se trouve sensiblement dans le prolongement de la première branche 34.

L'organe de renvoi suiveur 26' est en forme de L avec une branche 36 reliée à la bielle 32' et une branche 40 reliée par l'intermédiaire d'une barre de synchronisation à la troisième branche 38 du T. L'actionneur (vérin) 24 peut entraîner en rotation l'anneau de commande 22 de l'étage 10 d'aubes à calage angulaire variable par l'intermédiaire de l'organe de renvoi pilote 26, qui transmet le mouvement du vérin 24 à la bielle de commande 32 qui elle-même transmet le mouvement à l'anneau 22 dont elle est solidaire en translation (curviligne).

L'actionneur entraîne en rotation l'anneau de commande 22' par l'intermédiaire de la barre de synchronisation 30.

Le vérin 24 est commandé par une unité de commande électronique. Ses mouvements sont fonction de la vitesse N2 de rotation du compresseur HP.

Le moteur, comme on le voit sur la figure 1, comporte un deuxième équipement 110 à géométrie variable. Il s'agit en l'espèce d'une vanne de décharge d'air, du type VBV. Le paramètre variable de cet équipement 110 est l'angle d'ouverture de la vanne de décharge 110. Cet équipement 110 est disposé en aval du compresseur BP. La fonction de la vanne VBV 110 est de décharger de l'air à la sortie du compresseur BP 2 en fonction de conditions de fonctionnement définies. Le deuxième équipement 110 comporte généralement une pluralité de telles vannes.

Selon l'art antérieur l'équipement 110 est commandé par un système qui lui est propre. Sur la figure 1 on voit un actionneur A qui agit par l'intermédiaire d'une tringlerie T sur la vanne VBV.

Conformément à l'invention, on prévoit un système qui commande conjointement les deux équipements. Ainsi l'actionneur 24 qui commande les aubes VSV, commande également le déplacement d'un organe 115 de commande du second équipement 110, à l'aide d'un dispositif spécifique.

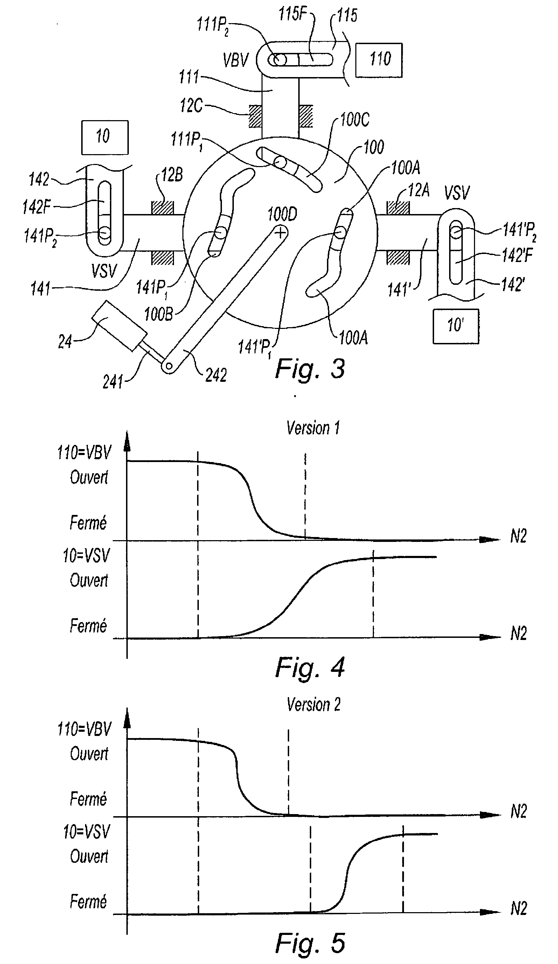

En se référant à la figure 3 qui montre schématiquement un système de commande selon un mode de réalisation, on voit l'actionneur 24 qui agit à la fois sur un premier équipement constitué par une paire 10 et 10' d'étages d'aubes à calage variable VSV et sur un deuxième équipement 110 constitué par une vanne ou une pluralité de vannes de décharge VBV.

Les anneaux de commande des aubes 10 et 10' sont mis en rotation autour de l'axe XX du moteur chacun par un levier pivotant, respectivement 142 et 142'. La liaison entre les anneaux de commande 22 et 22' et les leviers 142 et 142' ne sont pas représentés.

La vanne de décharge 110 est mise en mouvement par un levier 115 pivotant.

Les trois leviers 142, 142' et 115 sont commandés chacun par une tige, à savoir 141 et 141' pour les leviers 142 et 142' et 111 pour le levier 115.

Les tiges sont mobiles en translation à l'intérieur de guides solidaires du carter 12. La tige 111 est mobile le long de son axe dans le guide 12C. De même les tiges 141 et 141' sont mobiles axialement dans leur guide respectif 12A et 12B. Le mouvement de translation des tiges est transmis aux leviers par des liaisons dans lesquelles un pion, 141P2, 141'P2 et 111P2, solidaire des tiges coulisse librement dans la fente 142F, 142'F et 115F du levier qu'il commande. La fente permet d'absorber la variation de longueur du bras de levier quand les leviers pivotent autour de leur centre de rotation.

A leur autre extrémité les tiges, 141, 141' et 111, comportent chacune un autre pion transversal par rapport à leur axe, 141P1, 141'P1 et 111P1, qui peut coulisser dans une piste de guidage, 100A, 100B et 100C ménagée dans un disque 100. Le disque 100 est monté rotatif autour d'un axe 100D solidaire du carter 12. L'axe 100D est perpendiculaire au plan formé par les trois tiges.

Ainsi le disque rotatif 100 est relié auxdits équipements 10, 10', 110 par des moyens de transmission mécanique comprenant les pions 111P1, 141P1, 141'P1 parcourant une piste de guidage 100A, 100B, 100C. Les profils des pistes de guidage définissent les lois d'actionnement des équipements quand le disque 100 est entraîné en rotation autour de son axe 100D par l'actionneur 24.

La liaison entre les pions et leur piste respective est optimisée afin de réduire les pertes mécaniques. Les pions peuvent être en forme de douille à bille pour que le pion roule dans la piste sans frottement. Pour former une piste, les fentes ménagées dans le disque sont de la largeur des pions.

De préférence les bras de commande des deux étages 10 et 10' d'aubes de stator sont dans le prolongement l'un de l'autre afin de réduire les efforts sur l'axe de rotation 100D du disque 100. On réduit ainsi les frottements sur l'axe 100A et la puissance nécessaire à l'actionnement des tiges. Le dispositif n'est pas limité à la commande de deux bras pour les étages d'aubes de stator à angle à calage variable. On peut aisément adapter le dispositif pour un nombre plus élevé.

Le disque 100 est entraîné en rotation autour de son axe 100D par un actionneur 24. Ici l'actionneur est relié au disque par une tige 241 et un bras 242 relié au centre de ce dernier. Le déplacement de la tige le long de son axe par l'actionneur entraîne la rotation du disque par l'intermédiaire du bras 242. Selon que la tige 241 de l'actionneur 24 s'allonge ou se rétracte le disque tourne dans le sens des aiguilles d'une montre ou en sens inverse.

Ainsi lorsque le disque 100 tourne autour de son axe, le mouvement de rotation du disque est transformé en mouvement de translation des tiges en fonction de la position des pions à l'intérieur de leur piste respective. A chaque position angulaire du disque correspond une position précise des pions à l'intérieur de leur piste respective. La position des pions détermine la position angulaire des leviers auxquels les tiges sont attachées.

La position angulaire de chacun des leviers est déterminée, quand le disque tourne autour de son axe 100D, par la forme des pistes ménagées dans le disque.

Autrement dit la loi de pivotement des leviers quand le disque tourne autour de son axe est déterminée par la trajectoire des pions sur le disque. Cette trajectoire est donnée par le profil des pistes.

La solution de l'invention permet donc de définir la position d'ouverture ou de fermeture des aubes de stator et des vannes de décharge pour chaque position angulaire du disque.

En se référant aux figures 4 et 5 on voit les lois d'ouverture relative des aubes à calage variable (référencées VSV) et des vannes de décharge (référencées VBV) en fonction de la vitesse de rotation N2 du corps HP. A vitesse N2 nulle les vannes de décharge sont ouvertes et les aubes à calage variable sont en position dite fermée. Quand la vitesse augmente les vannes de décharge se ferment progressivement tandis que les aubes s'ouvrent. Dans la version V1 représentée sur la figure 4, quand la vitesse augmente, l'ouverture des aubes à calage variables VSV débute en même temps que la fermeture des vannes de décharge VBV mais se termine après, alors que dans la version V2, représentée par la figure 5, elle ne débute qu'après leur fermeture. Le choix d'une version, et le moment précis où débute la fermeture des vannes de décharge, sont définis en modifiant la forme des pistes.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de commande d'au moins deux équipements (10, 110) à géométrie variable d'un moteur à turbine à gaz, le moteur comportant au moins un premier corps tournant à une première vitesse et un deuxième corps tournant à une deuxième vitesse, le premier équipement (10) étant un étage d'aubes de stator à angle de calage variable d'un compresseur du premier corps évoluant entre une position fermée au ralenti et une position ouverte à fort régime, le second équipement (110) étant au moins une vanne de décharge d'un compresseur du deuxième corps évoluant entre une position ouverte au ralenti et une position fermée à fort régime, le système comportant en outre un actionneur (24) qui actionne les deux équipements **caractérisé par le fait qu'**il comprend un disque rotatif (100) autour d'un axe (100D) relié auxdits équipements (10, 110) par des moyens de transmission mécanique comprenant un pion (111P1, 141P1, 141'P1) parcourant une piste de guidage (100A, 100B, 100C), le profil des pistes définissant les lois d'actionnement des deux équipements quand le disque est entraîné en rotation autour de son axe par l'actionneur (24).

2. Système de commande selon la revendication 1 dans lequel le premier corps est un corps haute pression et le deuxième corps un corps basse pression.

3. Système de commande selon l'une des revendications 1 ou 2 dans lequel l'actionneur (24) est commandé en fonction de la vitesse de rotation d'un des corps du moteur.

4. Système de commande selon la revendication 3 dans lequel l'actionneur (24) est commandé par la vitesse de rotation du corps haute pression.

5. Système de commande selon la revendication précédente dont les moyens de transmission mécanique comprennent de tiges (141, 141', 111) d'actionnement des dits équipements, les pistes de guidage (100A, 100B, 100C) étant ménagées sur le disque rotatif (100) et les pions (111P1, 141P1, 141'P1) étant solidaires des tiges (141, 141', 111) d'actionnement des dits équipements.

6. système selon la revendication précédente dont les tiges (141, 141', 111) d'actionnement des dits équipements sont mobiles en translation.

7. Système de commande selon la revendication 3 combinée à l'une des revendications 5 à 7 dont le disque rotatif (100) est monté sur le carter du compresseur du premier corps.

8. Système selon l'une des revendications 4 à 6 dont l'actionneur (24) est un moteur électrique.

9. Système selon, l'une des revendications 4 à 6 dont l'actionneur (24) est un moteur hydraulique ou pneumatique.

10. Système de commande selon l'une des revendications 4 à 9 dans lequel les lois d'actionnement des équipements (10, 110) comprennent chacune une plage d'actionnement, la plage d'actionnement de l'un des équipements étant incluse dans la plage d'actionnement de l'autre équipement.

11. Système de commande selon l'une des revendications 4 à 9 dans lequel les lois d'actionnement des équipements (10, 110) comprennent chacune une plage d'actionnement, la plage d'actionnement du second équipement (110) étant entièrement hors de la plage de fonctionnement du premier équipement (10).

12. Moteur à turbine à gaz comportant un système de commande selon l'une des revendications ci-dessus.

## Claims

1. A system for controlling at least two variable geometry equipment items (10, 110) of a gas turbine engine, the engine comprising at least one first core rotating at a first speed and a second core rotating at a second speed, the first equipment item (10) being a variable-angle stator vane stage of a compressor of the first core moving between a closed position when idling and an open position at high speed, the second equipment item (110) being at least one discharge valve of a compressor of the second core moving between an open position when idling and a closed position at high speed, said system including an actuator (24) which actuates both equipment items **characterized in that** it comprises a disk (100) that rotates about an axis (100D) linked to said equipment items (10, 110) by mechanical transmission means comprising a pin (111P1, 141P1, 141'P1) that travels along a guiding track (100A, 100B, 100C), the profile of the tracks defining the actuation laws of the two equipment items when the disk is driven in rotation about its axis by the actuator (24).

2. The control system as claimed in claim 1, in which the first core is a high-pressure core and the second core is a low-pressure core.

3. The control system as claimed in one of claims 1 or 2, in which the actuator (24) is controlled according to the speed of rotation of one of the cores of the engine.

4. The control system as claimed in claim 3, in which the actuator (24) is controlled by the speed of rotation of the high-pressure core.

5. The control system as claimed in the preceding claim, in which the mechanical transmission means comprise rods (141, 141', 111) for actuating said equipment items, the guiding tracks (100A, 100B, 100C) being formed on the rotating disk (100) and the pins (111P1, 141P1, 141'P1) being firmly attached to the rods (141, 141', 111) actuating said equipment items.

6. The system as claimed in the preceding claim, in which the rods (141, 141', 111) actuating said equipment items are mobile in translation.

7. The control system as claimed in claim 3 in combination with one of claims 5 to 7, in which the rotating disk (100) is mounted on the casing of the compressor of the first core.

8. The system as claimed in one of claims 4 to 6, in which the actuator (24) is an electric motor.

9. The system as claimed in one of claims 4 to 6, in which the actuator (24) is a hydraulic or pneumatic motor.

10. The control system as claimed in one of claims 4 to 9, in which the actuation laws for the equipment items (10, 110) each comprise an actuation band, the actuation band of one of the equipment items being included within the actuation band of the other equipment item.

11. The control system as claimed in one of claims 4 to 9, in which the actuation laws for the equipment items (10, 110) each comprise an actuation band, the actuation band of the second equipment item (110) being entirely outside of the operating band of the first equipment item (10).

12. A gas turbine engine comprising a control system as claimed in one of the above claims.

## Patentansprüche

1. System zum Steuern von mindestens zwei Einrichtungen (10, 110) mit variabler Geometrie eines Gasturbinenmotors, wobei der Motor zumindest einen ersten Körper, der sich mit einer ersten Geschwindigkeit dreht, und einen zweiten Körper, der sich mit einer zweiten Geschwindigkeit dreht, aufweist, wobei die erste Einrichtung (10) eine Stufe von Statorschaufeln mit variablem Anstellwinkel eines Kompressors des ersten Körpers ist, die sich zwischen einer geschlossenen Stellung beim Abbremsen und einer zweiten geöffneten Stellung bei hoher Drehzahl verändert, wobei die zweite Einrichtung (110) zumindest ein Ablassventil eines Kompressors des zweiten Körpers ist, das sich zwischen einer offenen Stellung beim Abbremsen und einer geschlossenen Stellung bei hoher Drehzahl verändert, wobei das System ferner ein Antriebselement (24) aufweist, das die zwei Einrichtungen antreibt, **dadurch gekennzeichnet, dass** es eine Scheibe (100) umfasst, die um eine Achse (100D) drehbar ist und welche mit den Einrichtungen (10, 110) über mechanische Übertragungsmittel verbunden ist, die einen Stift (111P1, 141P1, 141'P1) umfassen, der eine Führungsbahn (100A, 100B, 100C) durchläuft, wobei das Profil der Bahnen die Regeln für den Antrieb der zwei Einrichtungen festlegt, wenn die Scheibe durch das Antriebselement (24) zur Drehung um ihre Achse angetrieben wird.

2. Steuersystem nach Anspruch 1, wobei der erste Körper ein Hochdruck-Körper und der zweite Körper ein Niederdruck-Körper ist.

3. Steuersystem nach einem der Ansprüche 1 oder 2, wobei das Antriebselement (24) in Abhängigkeit von der Drehzahl des einen der Körper des Motors gesteuert wird.

4. Steuersystem nach Anspruch 3, wobei das Antriebselement (24) durch die Drehzahl des Hochdruck-Körpers gesteuert wird.

5. Steuersystem nach dem vorhergehenden Anspruch, wobei die mechanischen Übertragungsmittel Stangen (141, 141', 111) zum Antreiben der Einrichtungen umfassen, wobei die Führungsbahnen (100A, 100B, 100C) auf der drehbaren Scheibe (100) angeordnet sind und die Stifte (111P1, 141P1, 141'P1) mit den Stangen (141, 141', 111) zum Antreiben der Einrichtungen fest verbunden sind.

6. System nach dem vorhergehenden Anspruch, wobei die Stangen (141, 141', 111) zum Antreiben der Einrichtungen linear verschiebbar sind.

7. Steuersystem nach Anspruch 3 in Kombination mit einem der Ansprüche 5 bis 7, wobei die drehbare Scheibe (100) auf dem Gehäuse des Kompressors des ersten Körpers montiert ist.

8. System nach einem der Ansprüche 4 bis 6, wobei das Antriebselement (24) ein Elektromotor ist.

9. System nach einem der Ansprüche 4 bis 6, wobei das Antriebselement (24) ein hydraulischer oder pneumatischer Motor ist.

10. Steuersystem nach einem der Ansprüche 4 bis 9, wobei die Regeln für den Antrieb der Einrichtungen (10, 110) jeweils einen Antriebsbereich umfassen, wobei der Antriebsbereich der einen der Einrichtungen in dem Antriebsbereich der anderen Einrichtung enthalten ist.

11. Steuersystem nach einem der Ansprüche 4 bis 9, wobei die Regeln für den Antrieb der Einrichtungen (10, 110) jeweils einen Antriebsbereich umfassen, wobei der Antriebsbereich der zweiten Einrichtung (110) vollständig außerhalb des Antriebsbereichs der ersten Einrichtung (10) liegt.

12. Gasturbinenmotor aufweisend ein Steuersystem nach einem der obigen Ansprüche.
